# FASCICULE DE BREVET EUROPEEN

(11) **EP 0 295 194 B1**
(45) Date de publication et mention de la délivrance du brevet: **30.03.1994**
(21) Numéro de dépôt: 88440046.6
(22) Date de dépôt: 10.06.1988
(51) Int. Cl.: B60B 1/00

(54) **Roue à rayons, en particulier pour bicyclettes, vélomoteurs, cyclomoteurs, véhicules automobiles et autres**
Speichenrad, insbesondere für Fahrräder, Mofas, Motorräder, Kraftfahrzeuge und andere Fahrzeuge
Spoked wheel, particularly for bicycles, mopeds, motorcycles, motorcars and others

(30) Priorité: 10.06.1987 FR 8708166
(43) Date de publication de la demande: 14.12.1988
(73) Titulaire: Marcellier, Robert, F-67210 Obernai (FR)
(72) Inventeur: Marcellier, Robert, F-67210 Obernai (FR)
(74) Mandataire: Nuss, Pierre

(56) Documents cités:
- EP-A- 0 076 223
- EP-A- 0 093 351
- EP-A- 0 130 449
- DE-C- 99 859
- DE-C- 321 914
- FR-A- 1 569 933
- US-A- 2 235 378

## Description

La présente invention concerne le domaine de la fabrication de roues rayons, en particulier pour bicyclettes, vélomoteurs, cyclomoteurs, véhicules automobiles et autres, et a pour objet une telle roue à rayons.

Actuellement, les roues à rayons existantes sont en général constituées par une jante reliée au moyeu par l'intermédiaire de rayons fixés à intervalles réguliers, par leur pied sur les joues du moyeu, et pouvant être réglés en tension au moyen d'écrous montés sur la jante.

Mais ces roues présentent un certain nombre d'inconvénients, à savoir principalement une faible résistance transversale, ceci pouvant entraîner facilement un voilage et donc une dissipation d'énergie, et un mauvais aérodynamisme du fait de la multiplicité des rayons, et donc du volume en mouvement. Par ailleurs, un réglage du voile et du saut doit être fréquemment effectué sur les roues actuelles, ce réglage étant long et délicat. En outre, lors d'une utilisation sur un terrain accidenté ou avec des rayons insuffisamment tendus, la jante se déforme, entraînant de ce fait une compression et un flottement du rayon, en particulier aux attaches tant sur le moyeu que sur la jante, et ainsi des efforts parasites répétitifs souvent responsables de rupture.

On sait que de nombreuses roues, en particulier les roues arrières de bicyclettes, comportent un montage disymétrique des rayons, dit en parapluie, la nappe du côté roue libre étant moins inclinée afin de permettre le logement des pignons. Il en résulte que les rayons du côté roue libre sont plus tendus, donc plus sollicités aux efforts statiques et aux efforts dynamiques. Ce type de montage entraîne donc également des ruptures de rayons fréquentes, encore accrues par le fait que les efforts d'entraînement sont presque intégralement encaissés par la nappe de rayons côté roue libre. Comme de plus, seul un rayon sur deux de cette nappe reprend, de par son montage, les efforts d'entraînement, il en résulte qu un rayon sur quatre est nettement plus sollicité.

On connaît par US-A-2 235 378 une construction de jantes rigides destinée à la réalisation d'une pièce légère présentant une résistance transversale importante. Cette construction reprend le principe des poutres et met en oeuvre une pièce devant encaisser la résistance principale et travaillant à la compression.

En outre, la liaison entre la jante et le moyeu est réalisée par des éléments en forme de flasques transversaux pourvus de nervures de renforcement en forme de bâtons se croisant en X, ces éléments étant solidarisés entre eux dans le plan radial par des axes de verrouillage. En fait, ces éléments sont moulés et l'ensemble de leurs parties constitutives est solidaire, de sorte que cette construction de jante n'est nullement comparable à une construction de roue à rayons, mais plutôt à une construction de roue à bâtons.

Le problème général à résoudre par l'objet de la présente invention consiste donc à réaliser une roue présentant une grande rigidité transversale entraînant une faible susceptibilité au voilage, un bon aérodynamisme et ne nécessitant plus un réglage du voile et du saut aussi fréquent. En outre, la tension des rayons doit être accentuée de manière à accroître la rigidité au roulement et à diminuer les pertes d'énergie, tout en présentant une excellente fiabilité grâce à la suppression du montage disymétrique des rayons, dit en parapluie. Enfin, la roue doit présenter une très bonne souplesse d'entraînement (ce qui n'est pas le cas, par exemple, des roues lenticulaires actuelles) et une grande simplicité de montage et de réglage.

A cet effet, l'invention consiste en une roue à rayons, notamment pour bicyclettes, vélomoteurs, cyclomoteurs, motocyclettes et véhicules automobiles, dont la liaison entre jante et moyeu est réalisée au moyen de sous-ensembles de rayons de traction, caractérisée en ce que chaque sous-ensemble de rayons de traction comporte une entretoise de compression et en ce que les sous-ensembles de rayons de traction sont articulés sur l'entretoise et sont constitués chacun par deux portions coudées en forme de V ou de U, dont les extrémités sont engagées dans la jante et dont les coudes sont reliés, librement entre eux, par l'entretoise de compression formant écarteur et s'étendant transversalement au plan de la jante, et par deux portions reliant, soit l'entretoise de compression au moyeu, soit directement chacune un coude au moyeu.

L'invention sera mieux comprise grâce à la description ci-après, qui se rapporte à des modes de réalisation préférés, donnés à titre d'exemples non limitatifs et expliqués avec référence aux dessins schématiques annexés, dans lesquels :
la figure 1 est une vue en perspective d'une roue à rayons conforme à l'invention, un seul sous-ensemble de rayons étant représenté ;
la figure 2 est une vue en perspective du sous-ensemble de rayons selon un premier mode de réalisation ;
la figure 3 est une vue analogue à celle de la figure 2 d'une autre variante de réalisation de l'invention ;
la figure 4 est une vue en coupe du sous-ensemble de rayons selon une troisième variante de réalisation de l'invention ;
la figure 5 est une vue en coupe du sous-ensemble de rayons selon une quatrième variante de réalisation de l'invention ;
la figure 6 est une vue partielle en coupe d'un sous-ensemble de rayons avec une entretoise munie de deux articulations ;
la figure 7 est une vue de face du moyeu muni d'articulations,
la figure 8 est une vue en coupe, de face, d'une articulation située dans la jante de la roue à rayons, et
la figure 9 est une vue analogue à celles des figures 2 et 3 d'une autre variante de réalisation de l'invention.

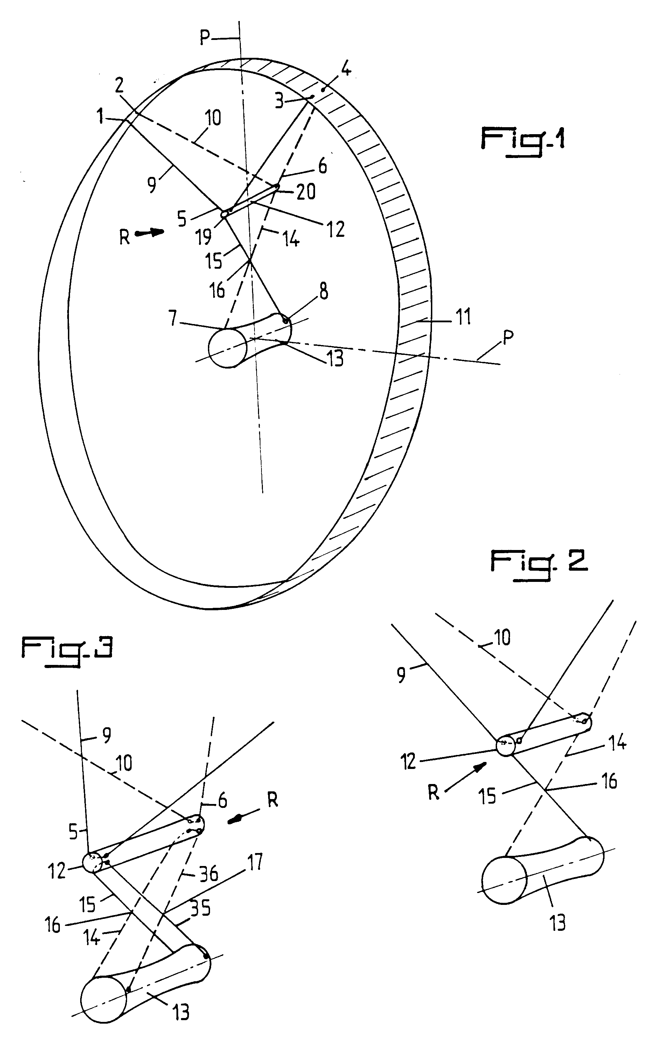

Conformément à l'invention, et comme le montrent plus particulièrement, à titre d'exemple, les figures 1 et 2 des dessins annexés, la roue à rayons, notamment pour bicyclettes, vélomoteurs, cyclomoteurs, motocyclettes, et véhicules automobiles, dont la liaison entre jante 11 et moyeu 13 est réalisée au moyen de sous-ensembles de rayons de traction R, caractérisée en ce que chaque sous-ensemble de rayons de traction R comporte une entretoise de compression 12 et en ce que les sous-ensembles de rayons de traction R sont articulés sur l'entretoise 12 et sont constitués chacun par deux portions coudées 9, 10 en forme de V ou de U, dont les extrémités 1, 2 ou 3, 4 sont engagées dans la jante 11 et dont les coudes 5 et 6 sont reliés, librement entre eux, par l'entretoise de compression 12 formant écarteur et s'étendant transversalement au plan P de la jante 11, et par deux portions 15, 14 reliant, soit l'entretoise de compression 12 au moyeu 13, soit directement chacune un coude 5, 6 au moyeu 13.

Les extrémités 2, 4 de la portion coudée 10 sont situées, soit en avant, soit entre, soit de part et d'autre, par rapport aux extrémités 1, 3 de la portion coudée 9, les extrémités 2, 4 étant, en outre, soit décalées, soit croisées, par rapport aux extrémités 1, 3, soit alignées avec elles dans le plan de la jante 11, soit confondues.

Cette structure, du fait de l'utilisation d'une entretoise de compression, améliore ainsi considérablement la rigidité transversale, la souplesse dynamique et la fiabilité de la roue. En effet, une déformation par application d'une force latérale sur la jante 11 induisant une tendance à un déplacement en direction transversale au plan P de la jante 11, a pour conséquence une tendance à un déplacement correspondant de l'entretoise de compression 12, sous la traction des rayons 9 ou 10 disposés du côté opposé à la direction de déplacement, la tendance au déplacement de ladite entretoise 12 étant contrecarrée par les rayons 14 ou 15 qui sont alors soumis à une surtension s'exerçant sur le moyeu 13 du côté opposé à la direction de déplacement, donc du côté de l'application de la force sur la jante 11, et sur l'entretoise de compression 12, du côté correspondant à la direction de déplacement, l'entretoise 12 réalisant le transfert des contraintes d'un côté à l'autre, sollicitant une réaction du côté opposé à l'application de la force. Ainsi, l'invention permet l'obtention d'une roue à rayons de traction présentant une très grande rigidité. En outre, les pertes d'énergie sont réduites, en particulier lors de sollicitations latérales, par exemple, lorsqu'un cycliste dispute un sprint ou se met en danseuse, lorsqu'un motocycliste balance sa motocyclette dans des virages alternés ou lorsqu'un automobiliste négocie à vive allure un virage serré.

Une disposition symétrique de chaque sous-ensemble de rayons R par rapport au plan P favorise une parfaite répartition des charges sur chaque brin du sous-ensemble de rayons R, et simplifie leur montage puisqu'ils sont tous d'égale longueur. Le maître couple de la roue peut être ramené à moins de la moitié de ce qu'il est sur une roue actuelle, ce qui améliore l'aérodynamisme, tant à la pénétration qu'à l'avancement et à la rotation.

Selon une caractéristique de l'invention, les extrémités 2, 4 de la portion coudée 10 peuvent être très rapprochées des extrémités 1, 3 de la portion coudée 9, voire même confondues. Les extrémités 1, 2, 3 et 4 de chaque sous-ensemble de rayons R peuvent également être parfaitement alignées le long de la jante.

Selon une autre caractéristique de l'invention, le point de croisement 16 des deux portions 14, 15 est situé dans le plan de symétrie P, entre l'entretoise de compression 12 et l'enveloppe du moyeu 13. A ce point de croisement peut être prévu un moyen de liaison des portions 14 et 15 entre elles, tel qu'une ligature, ou autre.

A l'extrême, le point de croisement 16 est situé sur l'enveloppe du moyeu 13, les portions 14, 15 étant alors soit indépendantes, soit solidarisées en forme d'un V dont le coude est engagé dans l'enveloppe du moyeu 13 ou dans une joue solidaire du moyeu 13.

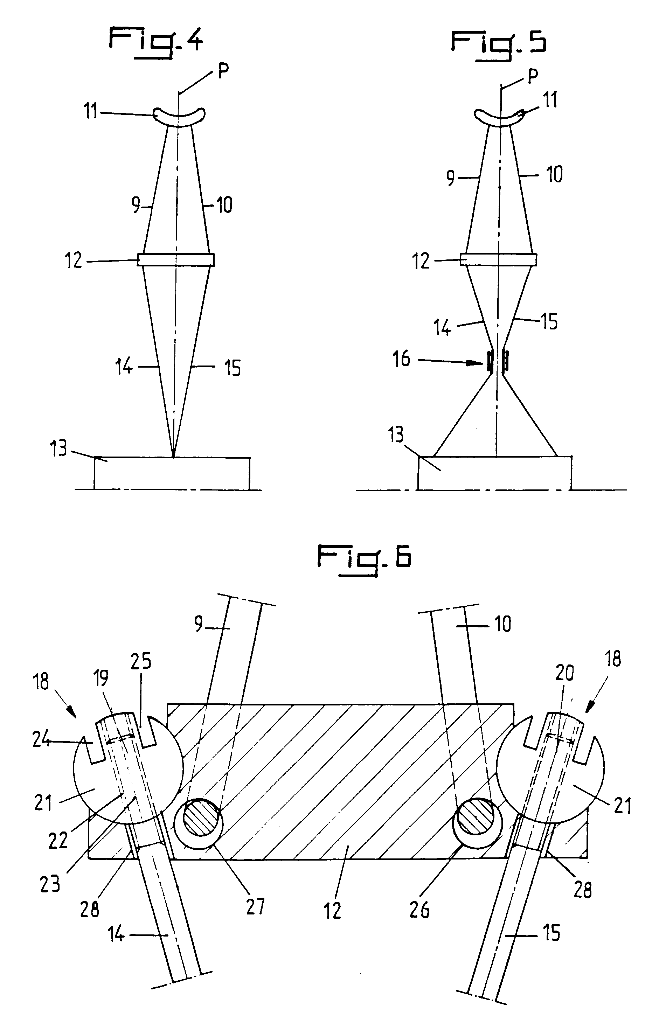

Cette première variante de réalisation est représentée à la figure 4 des dessins annexés.

Conformément à une seconde variante de l'invention, les deux portions 14, 15 qui se croisent au point 16 sont dédoublées par deux autres portions 35, 36, soit parallèles, soit divergentes, qui se croisent au point 17 et qui sont fixées de manière identique aux portions 14, 15. Cette variante est représentée à la figure 3 des dessins annexés. Elle est surtout utilisée lorsqu'il importe d'obtenir de meilleures reprises des efforts d'entraînement, une souplesse à l'écrasement plus grande et une solidité accrue.

Selon une autre caractéristique de l'invention, les portions 14 et 36 et 15 et 35 peuvent avantageusement être solidaires pour former des éléments coudés glissés dans des trous de l'entretoise de compression 12.

Comme le montre la figure 5, les deux portions 14, 15 et/ou 35, 36 sont des portions coudées, de telle manière qu'elles peuvent être en contact au point 16, ces portions coudées étant, soit reliées chacune par leurs extrémités au moyeu 13 et à l'entretoise de compression 12, soit reliées, l'une par ses deux extrémités à l'entretoise de compression 12, et l'autre par ses deux extrémités au moyeu 13, et maintenues, sans se croiser, en ce point 16 par tout moyen de liaison connu, tel qu'une ligature, un manchon taraudé coopérant avec des tronçons filetés des portions 14, 15 ou 35, 36, ou une boule munie d'au moins un trou.

Selon une autre caractéristique de l'invention, les longueurs des portions coudées 9, 10, et/ou de leurs branches, et/ou des portions simples 14, 15 et/ou dédoublées 35, 36 peuvent être inégales, l'entretoise de compression 12 étant alors éventuellement inclinée par rapport à l'axe de la roue, les extrémités des portions dédoublées étant avantageusement fixées chacune sur une extrémité du moyeu 13. Un tel mode de réalisation peut s'imposer tant pour des raisons esthétiques que constructives, un moyeu de roue étant souvent dissymétrique du fait de la présence d'un frein à tambour ou à disque, ou encore d'un ensemble de pignons.

Conformément à l'invention, les extrémités 1, 2, 3, 4 des deux portions coudées 9, 10 et les extrémités 7, 8, 19 et 20 des deux portions 14, 15 formant chaque sous-ensemble de rayons R sont reliées à la jante 11, à l'entretoise de compression 12 et au moyeu 13, par l'intermédiaire d'articulations 18.

Chacune des extrémités 1, 3 et 2, 4 des portions coudées 9, 10 est reliée à la jante 11 par l'intermédiaire d'une articulation 18, l'une des deux extrémités 19, 20 des portions 14, 15 étant reliée à l'entretoise de compression 12 par l'intermédiaire d'une articulation 18 et chacune des autres extrémités 7, 8 des portions 14, 15 étant reliée au moyeu 13 également par l'intermédiaire d'une articulation 18.

Les articulations 18 confèrent à la roue une grande souplesse d'adaptation sans induire de contraintes parasites, que celà soit sous charges statiques et dynamiques, par exemple transversales, ou à l'effort d'entraînement. Le montage radial des rayons se comporte en effet tel un accouplement élastique. Sous l'action d'un couple appliqué aux pignons, le moyeu 13 va légèrement pivoter par rapport à la jante 11 de quelques dixièmes de millimètres. Ainsi, les portions 14 et 15 s'inclinent et provoquent un très léger basculement ou glissement de l'entretoise de compression 12 sur les coudes 5, 6 des portions coudées 9, 10. Les portions 9, 10, 14 et 15 s'allongent alors, emmagasinent de l'énergie qu'elles restituent lorsque diminue l'action du couple. Ainsi, la performance, par exemple d'un cycliste, sera nettement améliorée puisque la force emmagasinée sera délivrée lors du passage aux points bas, l'effort du cycliste étant quasi nul lorsque les manivelles du pédalier sont verticales et maximum lorsqu'elles sont horizontales.

Chaque articulation 18 peut être, avantageusement, sous la forme d'une bille 21 munie d'un taraudage 22 le long de son axe de rotation 23, et munie de deux fentes 24, 25 situées de part et d'autre du taraudage 22, les différentes extrémités 1, 2, 3, 4, 7, 8, 19 et 20 des portions coudées 9, 10 ou des portions 14, 15 formant chaque sous-ensemble de rayons R étant toutes filetées, de manière à coopérer avec les billes 21 formant écrou.

Un outil à double embout de tournevis permet un engagement très facile dans les deux fentes 24 et 25, du fait d'un auto-centrage sur la bille 21. Le risque d'échappement est ainsi très réduit.

Chaque sous-ensemble de rayons R présente avantageusement trois articulations, respectivement au niveau de l'entretoise de compression 12, du moyeu 13 et de la jante 11.

Conformément à une autre caractéristique de l'invention, toutes les jonctions coudées peuvent être remplacées par deux éléments rectilignes filetés aux extrémités et munis de billes 21 formant écrou, ou filetés à une extrémité et pourvus à l'autre extrémité d'un bouton en forme de bille ou non.

En outre, les billes 21 peuvent être solidaires de certaines extrémités des portions 9, 10, 14, 15, 35 et 36 par soudage, par collage, par formage des bouts, ces billes 21 étant munies d'une empreinte de doubles fentes 24, 25, d'une seule fente, ou cruciforme.

Comme le montre la figure 6, l'entretoise de compression 12 est sous la forme d'un cylindre plein ou creux, de section régulière ou non, pourvu à chaque extrémité d'un ou de deux orifices 26, 27 permettant le passage libre et le maintien des coudes 5, 6 des portions coudées 9, 10, ainsi que de deux trous 28 permettant le passage de l'une des deux extrémités filetées 19, 20 des portions 14, 15, les deux billes 21 formant écrou et coopérant avec les extrémités filetées 19, 20 étant maintenues en place grâce à une cavité ou une forme hémisphérique 29 située à l'intérieur ou à l'extérieur de l'entretoise de compression 12. L'entretoise de compression 12 est donc conçue de manière à n'inclure aucune contrainte dans les portions 9, 10, 14, 15 qui s'y rattachent.

Le plan formé par la portion coudée 9 peut, par exemple, passer par le centre de la bille 21 formant écrou de la portion 14, afin d'éliminer tout effort parasite.

Selon une autre caractéristique de l'invention, non représentée aux dessins annexés, les portions coudées 9, 10 et/ou les portions 14, 15 peuvent être remplacées par des portions à double coudage en forme de U anguleux aux branches refermées ou croisées, l'entretoise de compression 12 présentant un ou des passages parallèles à son axe, ou encore une forme de boule munie de trous destinés à recevoir les parties formant l'âme du U, comprises entre les coudes.

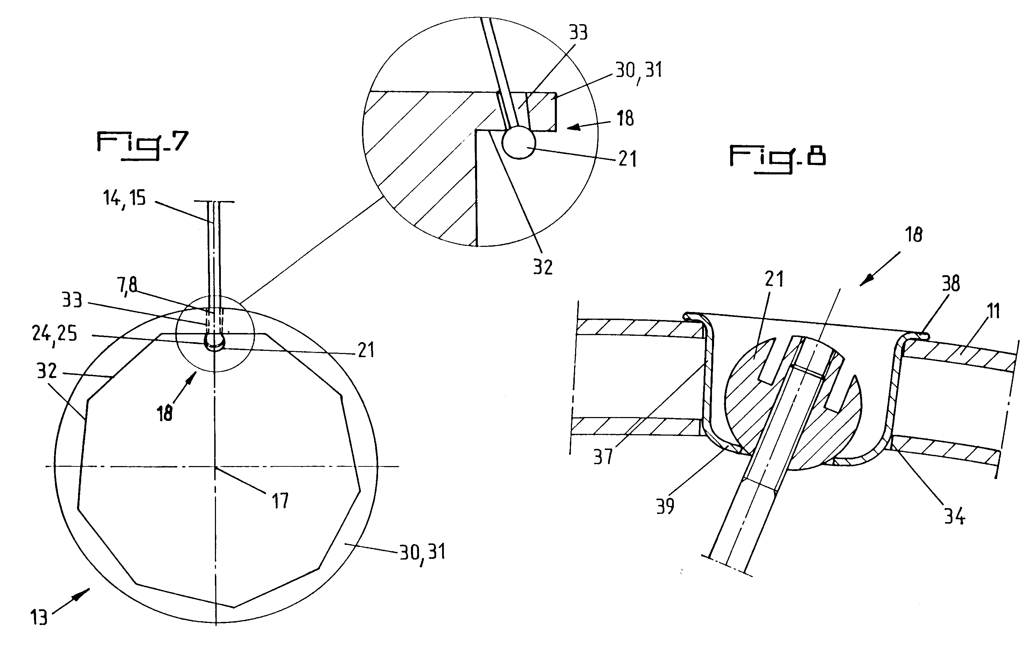

Comme on peut le voir sur la figure 7, chacun des deux flasques 30, 31 du moyeu 13 est évidé de telle façon que chaque face interne est pourvue de différentes facettes planes 32 soit parallèles à l'axe de rotation 17 du moyeu 13, soit inclinées perpendiculairement à la direction des portions 14, 15, un orifice 33 étant prévu au centre de chacune de ces facettes 32, éventuellement évasé, de manière à permettre le passage des extrémités filetées 7, 8 des portions 14, 15 et à les maintenir par les billes 21 formant écrou.

Enfin, comme représenté figure 8, la jante 11 est pourvue sur toute sa circonférence, d'orifices 34 éventuellement évasés, alignés ou non, et permettant le passage des quatre extrémités filetées 1, 3 et 2, 4 des portions coudées 9, 10, de façon à les maintenir par les billes 21 formant écrou.

La bille 21 formant écrou est avantageusement logée dans un oeillet débouchant 37 présentant un épaulement supérieur extérieur 38 s'appuyant sur la jante 11, et un épaulement inférieur intérieur 39 formant appui pour la bille 21. Elle pourrait également être logée dans un simple ocillet ou encore dans une rondelle ou sur un bossage concave aménagé sur le fond de la jante 11.

Ce type de montage permet d'éviter que, comme c'est le cas sur les roues actuelles, les orifices soient alternativement orientés à droite et à gauche.

En cas de rupture d'une portion coudée 9, 10 ou d'une portion 14, 15 d'un rayon R, c'est donc l'ensemble qui se désolidarise, ce qui rend impossible un quelconque voilage de la roue.

Selon une variante de réalisation simplifiée de l'invention, non représentée aux dessins annexés, les portions coudées 9, 10 et les portions 14, 15 ne sont pas croisées.

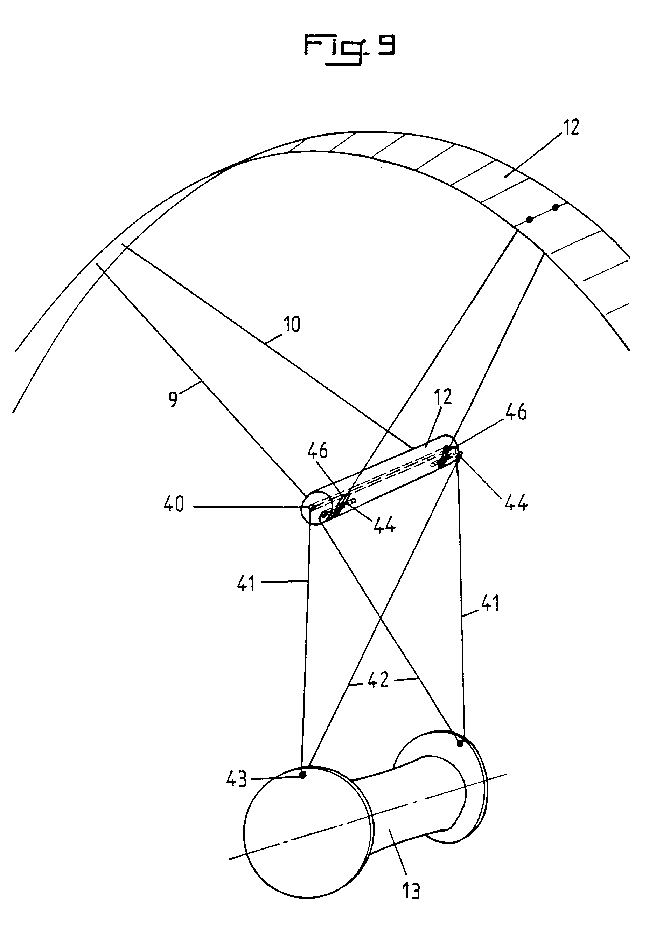

La figure 9 des dessins annexés représente une variante de réalisation des sous-ensembles suivant les figures 2 et 3, dans laquelle l'entretoise de compression 12 est reliée, d'une part, au moyeu 13 par l'intermédiaire d'un ensemble de rayons à quatre brins formé par un fil unique traversant un passage longitudinal 40 de l'entretoise de compression 12 ou un passage transversal du moyeu 13 parallèle à son axe ou des lumières des flasques du moyeu 13, deux brins directs 41 s'étendant de l'entretoise de compression 12 ou du moyeu 13 en direction du moyeu 13 ou de l'entretoise de compression 12 et étant reliés à deux brins croisés 42 au moyen d'un coude traversant des lumières 43 des flasques du moyeu 13 ou des lumières des extrémités de l'entretoise de compression 12, lesdits brins croisés 42 étant munis chacun à leur extrémité libre d'une partie recourbée 44 s'engageant dans un trou correspondant 45 des extrémités de l'entretoise de compression 12 ou dans une lumière des flasques du moyeu 13 ou un trou du moyeu 13, les brins 41 et 42 pouvant être apairés ou individuels, donc sans continuité de fil, et, d'autre part, à la jante 11 par l'intermédiaire des portions coudées 9 et 10 dont les coudes s'appuient au fond de gorges 46 prévues aux extrémités de l'entretoise de compression 12.

Selon une autre variante de réalisation de l'invention, non représentée aux dessins annexés, l'ensemble de rayons à quatre brins est formé par un fil fermé ou sans fin, la liaison des extrémités des brins étant réalisée par des boucles coopérant, au niveau du moyeu 13, avec des manetons traversant ou non, prévus dans le moyeu 13 ou ses flasques, ou supportés sur ces derniers ou dans ce dernier, par accrochage dans les gorges desdits manetons, et, au niveau de l'entretoise de compression 12, soit avec accrochage dans une gorge des extrémités de ladite entretoise ou par passage dans un trou prévu dans lesdites extrémités.

Ces modes de réalisations à quatre brins permettent l'obtention de sous-ensembles particulièrement résistants et rigides, en particulier au niveau de la fixation sur le moyeu 13. En outre, l'entretoise de compression 12 avec ses passages 40 et trous 45 et ses gorges 46 permet d'équilibrer parfaitement la répartition des contraintes entre les brins directs 41 et les brins croisés 42. Enfin, en cas de rupture de l'un des brins, l'ensemble ne se délie pas, de sorte qu'il ne se forme pas de voile. Enfin, le mode de réalisation conforme à l'invention permet un montage simple et rapide.

La présente invention a été décrite plus particulièrement pour des roues notamment pour bicyclettes, vélomoteurs, cyclomoteurs, motocyclettes et véhicules automobiles. Mais il va de soi qu'elle s'applique également pour tous dispositifs à rayons, tels que des accouplements élastiques, des volants d'inertie, des volants de véhicules et autres.

Bien entendu, l'invention n'est pas limitée aux modes de réalisation décrits et représentés aux dessins annexés. Des modifications restent possibles, notamment du point de vue de la constitution des divers éléments, ou par substitution d'équivalents techniques, sans sortir pour autant du domaine de protection de l'invention défini par les revendications qui suivent.

## Revendications

1. Roue à rayons, notamment pour bicyclettes, vélomoteurs, cyclomoteurs, motocyclettes et véhicules automobiles, dont la liaison entre jante (11) et moyeu (13) est réalisée au moyen de sous-ensembles de rayons de traction (R), caractérisée en ce que chaque sous-ensemble de rayons de traction (R) comporte une entretoise de compression (12) et en ce que les sous-ensembles de rayons de traction (R) sont articulés sur l'entretoise (12) et sont constitués chacun par deux portions coudées (9, 10) en forme de V ou de U, dont les extrémités (1, 2 ou 3, 4) sont engagées dans la jante (11) et dont les coudes (5 et 6) sont reliés, librement entre eux, par l'entretoise de compression (12) formant écarteur et s'étendant transversalement au plan (P) de la jante (11), et par deux portions (15, 14) reliant, soit l'entretoise de compression (12) au moyeu (13), soit directement chacune un coude (5, 6) au moyeu (13).

2. Roue, selon la revendication 1, caractérisée en ce que les extrémités (2, 4) de la portion coudée (10) sont situées de manière quelconque par rapport aux extrémités (1, 3) de la portion coudée (9), les extrémités (2, 4) étant, en outre, soit décalées, soit croisées, par rapport aux extrémités (1, 3), soit alignées avec elles dans le plan de la jante (11), soit confondues.

3. Roue, selon la revendication 1, caractérisée en ce que les portions (14, 15) se croisent en un point (16) situé sur l'enveloppe du moyeu (13) et sont soit indépendantes, soit solidarisées en forme d'un V, dont le coude est engagé dans l'enveloppe du moyeu (13) ou dans une joue solidaire du moyeu (13).

4. Roue, selon l'une quelconque des revendications 1 à 3, caractérisée en ce que les deux portions (14, 15) qui se croisent en un point (16) sont dédoublées par deux autres portions (35, 36), soit parallèles, soit divergentes.

5. Roue, selon l'une quelconque des revendications 1, 3 et 4, caractérisée en ce que les portions (14 et 36 et 15 et 35) sont avantageusement solidaires pour former des éléments coudés glissés dans des trous de l'entretoise de compression (12).

6. Roue, selon l'une quelconque des revendications 1 et 3 à 5, caractérisée en ce que les portions (14, 15 et/ou 35, 36) sont des portions coudées, de telle manière qu'elles peuvent être en contact au point (16), ces portions coudées étant, soit reliées chacune par leurs extrémités au moyeu (13) et à l'entretoise de compression (12), soit reliées, l'une par ses deux extrémités à l'entretoise de compression (12), et l'autre par ses deux extrémités au moyeu (13), et maintenues, sans se croiser, en ce point (16) par tout moyen de liaison connu, tel qu'une ligature, un manchon taraudé coopérant avec des tronçons filetés des portions (14, 15 ou 35, 36), ou une boule munie d'au moins un trou.

7. Roue, selon l'une quelconque des revendications 1 à 6, caractérisée en ce que les longueurs des portions coudées (9, 10), et/ou de leurs branches, et/ou des portions simples (14, 15) et/ou dédoublées (35, 36) sont inégales, l'entretoise de compression (12) étant alors éventuellement inclinée par rapport à l'axe de la roue, les extrémités des portions dédoublées étant avantageusement fixées chacune sur une extrémité du moyeu (13).

8. Roue, selon l'une quelconque des revendications 1 à 3, caractérisée en ce que les extrémités (1, 2, 3, 4) des deux portions coudées (9, 10) et les extrémités (7, 8, 19 et 20) des deux portions (14, 15) formant chaque sous-ensemble de rayons (R) sont reliées à la jante (11), à l'entretoise de compression (12) ou au moyeu (13), par l'intermédiaire d'articulations (18).

9. Roue, selon la revendication 8, caractérisée en ce que chaque articulation (18) est sous la forme d'une bille (21) munie d'un taraudage (22) le long de son axe de rotation (23), et munie de deux fentes (24, 25) situées de part et d'autre et à égale distance du taraudage (22), les différentes extrémités (1, 2, 3, 4, 7, 8, 19 et 20) des portions coudées (9, 10) ou des portions (14, 15) formant chaque sous-ensemble de rayons (R) étant toutes filetées, de manière à coopérer avec les billes (21) formant écrou.

10. Roue, selon l'une quelconque des revendications 1, 8 et 9, caractérisée en ce que l'entretoise de compression (12) est sous la forme d'un cylindre plein ou creux, de section régulière ou non, pourvu à chaque extrémité d'un ou de deux orifices (26, 27) permettant le passage et le maintien libre des coudes (5, 6) des portions coudées (9, 10), ainsi que de deux trous (28) permettant le passage de l'une des deux extrémités filetées (19, 20) des portions (14, 15), les deux billes (21) formant écrou et coopérant avec les extrémités filetées (19, 20) étant maintenues en place grâce à une cavité ou une forme hémisphérique (29) située à l'intérieur ou à l'extérieur de l'entretoise de compression (12).

11. Roue, selon l'une quelconque des revendications 1 et 10, caractérisée en ce que le moyeu (13) présente deux flasques (30, 31) qui sont évidés de telle façon que chaque face interne est pourvue de différentes facettes planes (32) soit parallèlement à l'axe de rotation (17) du moyeu (13), soit inclinées perpendiculairement à la direction des portions (14, 15), un orifice (33) étant prévu au centre de chacune de ces facettes (32), éventuellement évasé, de manière à permettre le passage des extrémités filetées (7, 8) des portions (14, 15) et à les maintenir par les billes (21) formant écrou.

12. Roue, selon l'une quelconque des revendications 1, 2 et 8 à 10, caractérisée en ce que la jante (11) est pourvue, sur toute sa circonférence, d'orifices (34) éventuellement évasés, alignés ou non, et permettant le passage des quatre extrémités filetées (1, 3 et 2, 4) des portions coudées (9, 10), de façon à les maintenir par les billes (21) formant écrou.

13. Roue, selon la revendication 12, caractérisée en ce que la bille (21) formant écrou est avantageusement logée dans un oeillet débouchant (37) présentant un épaulement supérieur extérieur (38) s'appuyant sur la jante (11), et un épaulement inférieur intérieur (39) formant appui pour la bille (21).

14. Roue, selon l'une quelconque des revendications 1 à 12, caractérisée en ce que toutes les jonctions (9, 10, 14, 15, 35 et 36) sont sous forme de deux éléments rectilignes filetés aux extrémités et munis de billes (21) formant écrou, ou filetés à une extrémité et pourvus à l'autre extrémité d'un bouton en forme de bille ou non.

15. Roue, selon la revendication 8, caractérisée en ce que certaines extrémités des portions (9, 10, 14 15, 35 et 36) sont pourvues par soudage, par collage ou par formage de bouts d'articulation (18) en forme de billes (21), ces billes (21) étant munies d'une empreinte de double fente (24, 25), d'une seule fente, ou cruciforme.

16. Roue, selon l'une quelconque des revendications 1 à 12, 14 et 15, caractérisée en ce que les portions (9, 10 et/ou 14, 15) sont des portions à double coudage en forme de U anguleux aux branches refermées ou croisées, l'entretoise de compression (12) présentant un ou des passages parallèles à son axe, ou encore une forme de boule munie de trous destinés à recevoir les parties formant l'âme du U, comprises entre les coudes.

17. Roue, selon l'une quelconque des revendications 1 et 3 à 5, caractérisée en ce que les portions (14, 15, 35, 36) sont sous forme d'un ensemble de rayons à quatre brins formé par un fil unique traversant un passage longitudinal (40) de l'entretoise de compression (12) ou un passage transversal du moyeu (13) parallèle à son axe ou des lumières des flasques de moyeu (13), deux brins directs (41) s'étendant de l'entretoise de compression (12) ou du moyeu (13) en direction du moyeu (13) ou de l'entretoise de compression (12) et étant reliés à deux brins croisés (42) au moyen d'un coude traversant des lumières (43) des flasques du moyeu (13) ou des lumières des extrémités de l'entretoise de compression (12), lesdits brins croisés (42) étant munis chacun à leur extrémité libre d'une partie recourbée (44) s'engageant dans un trou correspondant (45) des extrémités de l'entretoise de compression (12) ou dans une lumière des flasques du moyeu (13) ou un trou du moyeu (13), et les coudes des portions coudées (9 et 10), reliées à la jante (11), s'appuient au fond de gorges (46) prévues aux extrémités de l'entretoise de compression (12).

18. Roue, selon l'une quelconque des revendications 1 et 3 à 5, caractérisée en ce que les portions (14, 15, 35, 36) sont sous forme d'un ensemble de rayons à quatre brins (41 et 42) apairés ou individuels, coopérant avec un passage longitudinal de l'entretoise de compression (12) ou avec un passage transversal du moyeu (13) parallèle à son axe ou des lumières des flasques de moyeu (13), deux brins directs (41) s'étendant de l'entretoise de compression (12) ou du moyeu (13) en direction du moyeu (13) ou de l'entretoise de compression (12) et étant reliés à ce dernier, les brins croisés (42) coopérant avec des lumières (43) des flasques du moyeu (13) ou des lumières des extrémités de l'entretoise de compression (12), lesdits brins croisés (42) étant munis chacun à leurs extrémités, soit d'une partie recourbée (44) s'engageant dans un trou correspondant (45) des extrémités de l'entretoise de compression (12) ou dans une lumière des flasques du moyeu (13) ou un trou du moyeu (13), soit d'un filetage coopérant avec une bille formant écrou, et les coudes des portions coudées (9 et 10), reliées à la jante (11), s'appuient au fond de gorges (46) prévues aux extrémités de l'entretoise de compression (12).

19. Roue, selon la revendication 17, caractérisée en ce que l'ensemble de rayons à quatre brins est formé par un fil fermé ou sans fin, la liaison des extrémités des brins étant réalisée par des boucles coopérant, au niveau du moyeu (13), avec des manetons traversant ou non, prévus dans le moyeu (13) ou ses flasques, ou supportés sur ces derniers ou dans ce dernier, par accrochage dans les gorges desdits manetons, et, au niveau de l'entretoise de compression (12), soit avec accrochage dans une gorge des extrémités de ladite entretoise ou par passage dans un trou prévu dans lesdites extrémités.

## Claims

1. Spoked wheel, in particular for bicycles, mopeds, motorised bicycles, motor cycles and motor vehicles, of which the connection between the wheel rim (11) and the hub (13) is produced by means of sub-systems of traction spokes (R), characterised in that each sub-system of traction spokes (R) comprises a compression brace (12) and in that the sub-systems of traction spokes (R) are articulated to the brace (12) and each consist of two V or U-shaped elbow portions (9, 10) of which the ends (1, 2 or 3, 4) engage in the wheel rim (11) and of which the elbows (5 and 6) are connected freely among themselves by the compression brace (12) forming a spacer and extending transversely to the plane (P) of the wheel rim (11) and of two portions (15, 14) connecting either the compression brace (12) to the hub (13) or each directly connecting an elbow (5, 6) to the hub (13).

2. Wheel according to Claim 1, characterised in that the ends (2, 4) of the elbow portion (10) are located in any manner relative to the ends (1, 3) of the elbow portion (9), the ends (2, 4) also being offset or crossed relative to the ends (1, 3) or aligned with them in the plane of the wheel rim (11) or combined.

3. Wheel according to Claim 1, characterised in that the portions (14, 15) intersect at a point (16) located on the surface of the hub (13) and are either independent or are connected in the form of a V of which the elbow engages in the surface of the hub (13) or in an integral end-plate of the hub (13).

4. Wheel according to any one of Claims 1 to 3, characterised in that the two portions (14, 15) which intersect at a point (16) are doubled by two other portions (35, 36) which are either parallel or divergent.

5. Wheel according to any one of Claims 1, 3 and 4, characterised in that the portions (14 and 36 and 15 and 35) are advantageously integral so as to form elbow elements which are slid into holes in the compression brace (12).

6. Wheel according to any one of Claims 1 and 3 to 5, characterised in that the portions (14, 15 and/or 35, 36) are elbow portions such that they may be in contact with the point (16), these elbow portions either each being connected by their ends to the hub (13) and to the compression brace (12) or connected one by its two ends to the compression brace (12) and the other by its two ends to the hub (13) and being held without intersecting at this point (16) by any known connecting means such as a binding, a tapped sleeve cooperating with threaded pieces of the portions (14, 15 or 35, 36) or a sphere equipped with at least one hole.

7. Wheel according to any one of Claims 1 to 6, characterised in that the lengths of the elbow portions (9, 10) and/or their branches and/or single portions (14, 15) and/or doubled portions (35, 36) are unequal, the compression brace (12) then optionally being inclined to the axis of the wheel, the ends of the doubled portions advantageously each being fixed to one end of the hub (13).

8. Wheel according to any one of Claims 1 to 3, characterised in that the ends (1, 2, 3, 4) of the the two elbow portions (9, 10) and the ends (7, 8, 19 and 20) of the two portions (14, 15) forming each sub-system of spokes (R) are connected to the wheel rim (11), to the compression brace (12) or to the hub (13) by means of articulations (18).

9. Wheel according to Claim 8, characterised in that each articulation (18) is in the form of a ball (21) equipped with tapping (22) along its axis of rotation (23) and equipped with two slots (24, 25) located on either side of and at an equal distance from the tapping (22), the different ends (1, 2, 3, 4, 7, 8, 19 and 20) of the elbow portions (9, 10) or of the portions (14, 15) forming each sub-system of spokes (R) all being threaded so as to co-operate with the balls (21) forming a nut.

10. Wheel according to any one of Claims 1, 8 and 9, characterised in that the compression brace (12) is in the form of a solid or hollow cylinder of regular or irregular cross-section provided with one or two orifices (26, 27) at each end allowing the passage and free holding of the elbows (5, 6) of the elbow portions (9, 10) and with two holes (28) allowing the passage of one of the two threaded ends (19, 20) of the portions (14, 15), the two balls (21) forming a nut and co-operating with the threaded ends (19, 20) being held in position by means of a cavity or a hemispherical shape (29) located inside or outside the compression brace (12).

11. Wheel according to any one of Claims 1 and 10, characterised in that the hub (13) has two end-plates (30, 31) which are recessed such that each internal face is provided with different plane facets (32) either parallel to the axis of rotation (17) of the hub (13) or inclined perpendicularly to the direction of the portions (14, 15), an orifice (33) being provided at the centre of each of these facets (32) and optionally being flared so as to allow the passage of the threaded ends (7, 8) of the portions (14, 15) and to hold them via the balls (21) forming a nut.

12. Wheel according to any one of Claims 1, 2 and 8 to 10, characterised in that the wheel rim (11) is provided, over its entire circumference, with optionally flared aligned or non-aligned orifices (34) allowing the passage of the four threaded ends (1, 3 and 2, 4) of the elbow portions (9, 10) so as to hold them via the balls (21) forming a nut.

13. Wheel according to Claim 12, characterised in that the ball (21) forming a nut is advantageously housed in an opening lug (37) having an external upper shoulder (38) resting on the wheel rim (11) and a lower internal shoulder (39) forming a support for the ball (21).

14. Wheel according to any one of Claims 1 to 12, characterised in that all the joints (9, 10, 14, 15, 35 and 36) are in the form of two rectilinear elements which are threaded at the ends and are equipped with balls (21) forming a nut or are threaded at one end and provided, at the other end, with a button which may or may not be ball shaped.

15. Wheel according to Claim 8, characterised in that some ends of the portions (9, 10, 14, 15, 35 and 36) are provided by welding, adhesion or by shaping articulating stubs (18) in the form of balls (21), these balls (21) being equipped with an impression of a double slot (24, 25), a single slot or a cross-shaped impression.

16. Wheel according to any one of Claims 1 to 12, 14 and 15, characterised in that the portions (9, 10 and/or 14, 15) are double elbow portions in the form of an angular U having closed or crossed branches, the compression brace (12) having one or more passages parallel to its axis or again the shape of a sphere equipped with holes intended to receive the parts forming the core of the U contained between the elbows.

17. Wheel according to any one of Claims 1 and 3 to 5, characterised in that the portions (14, 15, 35, 36) are in the form of a system of spokes having four strands formed by a single wire traversing a longitudinal passage (40) of the compression brace (12) or a transverse passage of the hub (13) parallel to its axis or apertures in the end-plates of the hub (13), two direct strands (41) extending from the compression brace (12) or from the hub (13) in the direction of the hub (13) or of the compression brace (12) and being connected to two crossed strands (42) by means of an elbow traversing the apertures (43) of the end-plates of the hub (13) or the apertures of the ends of the compression brace (12), said crossed strands (42) each being equipped at their free end with a bent part (44) which engages in a corresponding hole (45) in the ends of the compression brace (12) or in an aperture in the end-plates of the hub (13) or a hole in the hub (13), and the elbows of the elbow portions (9 and 10) connected to the wheel rim (11) rest on the bottom of grooves (46) provided at the ends of the compression brace (12).

18. Wheel according to any one of Claims 1 and 3 to 5, characterised in that the portions (14, 15, 35, 36) are in the form of a system of paired or individual spokes having four strands (41 and 42) co-operating with a longitudinal passage in the compression brace (12) or with a transverse passage in the hub (13) parallel to its axis or apertures in the end-plates of the hub (13), two direct strands (41) extending from the compression brace (12) or from the hub (13) in the direction of the hub (13) or of the compression brace (12) and being connected to the latter, the crossed strands (42) co-operating with apertures (43) in the end-plates of the hub (13) or apertures in the ends of the compression brace (12), said crossed strands (42) each being equipped at their ends either with a bent part (44) engaging in a corresponding hole (45) in the ends of the compression brace (12) or in an aperture in the end-plates of the hub (13) or a hole in the hub (13), or a thread co-operating with a ball forming a nut, and the elbows of the elbow portions (9 and 10) connected to the wheel rim (11) rest on the bottom of grooves (46) provided at the ends of the compression brace (12).

19. Wheel according to Claim 17, characterised in that the system of spokes having four strands is formed by a closed or endless wire, the connection between the ends of the strands being produced by loops co-operating, in the region of the hub (13), with traversing or non-traversing pins provided in the hub (13) or its end-plates or supported on the end-plates or in the hub by attachment in the grooves of said pins and, in the region of the compression brace (12), either with attachment in a groove in the ends of said brace or by passage in a hole provided in said ends.

## Patentansprüche

1. Speichenrad, insbesondere für Fahrräder, Mopeds, Mofas, Motorräder und Kraftfahrzeuge, bei dem die Verbindung zwischen der Felge (11) und der Nahe (13) mittels Untergruppen von Zugspeichen (R) hergestellt ist, dadurch gekennzeichnet, daß jede Untergruppe von Zugspeichen (R) eine Druckstrebe (12) aufweist, und daß die Untergruppen von Zugspeichen (R) mit der Strebe (12) verbunden sind und jeweils aus zwei U- oder V-förmig gebogenen Abschnitten (9, 10) bestehen, deren Enden (1, 2 oder 3, 4) in die Felge (11) eingefügt sind und deren Biegungen (5 und 6) voneinander unabhängig durch die Druckstrebe (12) verbunden sind, welche einen Abstandshalter darstellt und sich in Querrichtung zur Ebene (P) der Felge (11) erstreckt, sowie durch zwei Abschnitte (15, 14), welche entweder die Druckstrebe (12) mit der Nabe (13) oder jeweils eine Biegung (5, 6) unmittelbar mit der Nabe (13) verbinden.

2. Rad nach Anspruch 1, dadurch gekennzeichnet, daß die Enden (2, 4) des gebogenen Abschnitts (10) im Verhältnis zu den Enden (1, 3) des gebogenen Abschnitts (9) auf eine beliebige Weise liegen, wobei die Enden (2, 4) des weiteren im Verhältnis zu den Enden (1, 3) entweder versetzt oder gekreuzt sind oder in der Ebene der Felge (11) mit ihnen fluchten oder vereinigt sind.

3. Rad nach Anspruch 1, dadurch gekennzeichnet, daß die Abschnitte (14, 15) sich in einem auf dem Mantel der Nabe (13) liegenden Punkt (16) kreuzen und entweder separat oder zu einer V-Form vereinigt sind, deren Biegung in den Mantel der Nabe (13) oder in ein Seitenteil der Nabe (13) eingefügt ist.

4. Rad nach einem der Ansprüche 1 bis 3, dadurch gekennzeichnet, daß die beiden Abschnitte (14, 15), welche sich in einem Punkt (16) kreuzen, durch zwei weitere, zu ihnen parallele oder von ihnen divergierende Abschnitte (35, 36) doppelt ausgeführt sind.

5. Rad nach einem der Ansprüche 1, 3 und 4, dadurch gekennzeichnet, daß die Abschnitte (14 und 36 sowie 15 und 35) vorteilhaft einstückig ausgeführt sind, so daß sie gebogene Elemente bilden, welche durch Löcher in der Druckstrebe (12) geschoben sind.

6. Rad nach einem der Ansprüche 1 und 3 bis 5, dadurch gekennzeichnet, daß die Abschnitte (14, 15 und/oder 35, 36) derart gebogene Abschnitte sind, daß sie sich im Punkt (16) berühren können, wobei die gebogenen Abschnitte entweder mit ihren jeweiligen Enden an der Nabe (13) und an der Druckstrebe (12) oder jeweils eine mit ihren beiden Enden an der Druckstrebe (12) und die andere mit ihren beiden Enden an der Nabe (13) befestigt sind und an diesem Punkt (16) von einem beliebigen bekannten Verbindungsmittel, wie etwa einer Bindung, einer mit Gewindepartien der Abschnitte (14, 15 oder 35, 36) zusammenwirkenden Gewindemuffe, oder einer mit mindestens einem Loch versehenen Kugel zusammengehalten werden, ohne sich zu kreuzen.

7. Rad nach einem der Ansprüche 1 bis 6, dadurch gekennzeichnet, daß die Längen der gebogenen Abschnitte (9, 10) und/oder ihrer Arme, und/oder der einfachen Abschnitte (14, 15) und/oder der verdoppelten Abschnitte (35, 36) ungleich sind, wobei die Druckstrebe (12) dann gegebenenfalls im Verhältnis zur Radachse geneigt ist und die Enden der verdoppelten Abschnitte vorteilhaft jeweils an einem Ende der Nabe (13) befestigt sind.

8. Rad nach einem der Ansprüche 1 bis 3, dadurch gekennzeichnet, daß die Enden (1, 2, 3, 4) der beiden gebogenen Abschnitte (9, 10) und die Enden (7, 8, 19 und 20) der beiden Abschnitte (14, 15), welche jede Untergruppe von Speichen (R) bilden, mittels Gelenken (18) mit der Felge (11), der Druckstrebe (12) oder der Nabe (13) verbunden sind.

9. Rad nach Anspruch 8, dadurch gekennzeichnet, daß jedes Gelenk (18) die Form einer entlang ihrer Drehachse (23) mit einem Innengewinde (22) versehenen Kugel (21) aufweist und mit zwei Schlitzen (24, 25) versehen ist, welche zu beiden Seiten sowie in gleichem Abstand vom Innengewinde (22) angeordnet sind, wobei die verschiedenen Enden (1, 2, 3, 4, 7, 8, 19 und 20) der gebogenen Abschnitte (9, 10) oder der Abschnitte (14, 15), welche jede Untergruppe von Speichen (R) bilden, alle mit einem Gewinde versehen sind, so daß sie mit den als Muttern ausgebildeten Kugeln (21) zusammenwirken.

10. Rad nach einem der Ansprüche 1, 8 und 9, dadurch gekennzeichnet, daß die Druckstrebe (12) die Form eines Massiv- oder Hohlzylinders mit regelmäßigem oder unregelmäßigem Querschnitt aufweist, welcher an jedem Ende mit einer oder zwei Öffnungen (26, 27) versehen ist, welche den unabhängigen Durchgang und Halt der Biegungen (5, 6) der gebogenen Abschnitte (9, 10) ermöglichen, sowie auch mit zwei Löchern (28), welche den Durchgang eines der zwei mit Gewinde versehenen Enden (19, 20) der Abschnitte (14, 15) ermöglichen, wobei die beiden als Muttern ausgebildeten Kugeln (21), welche mit den mit Gewinde versehenen Enden (19, 20) zusammenwirken, mittels einer innen oder außen an der Druckstrebe (12) angeordneten Höhlung oder Halbkugelform (29) festgehalten sind.

11. Rad nach einem der Ansprüche 1 und 10, dadurch gekennzeichnet, daß die Nabe (13) zwei Flansche (30, 31) aufweist, welche derart gehöhlt sind, daß jede Innenfläche mit verschiedenen planen Facetten (32) entweder parallel zur Drehachse (17) der Nabe (13) oder senkrecht zur Richtung der Abschnitte (14, 15) geneigt versehen ist, wobei eine gegebenenfalls ausgebauchte Öffnung (33) in der Mitte jeder dieser Facetten (32) so vorgesehen ist, daß die mit Gewinde versehenen Enden (7, 8) der Abschnitte (14, 15) hindurchgehen und von den als Muttern ausgebildeten Kugeln (21) festgehalten werden können.

12. Rad nach einem der Ansprüche 1, 2 und 8 bis 10, dadurch gekennzeichnet, daß die Felge (11) auf ihrem gesamten Umfang mit gegebenenfalls ausgebauchten Öffnungen (34) versehen ist, welche fluchtend angeordnet sein können und den Durchgang der vier mit Gewinde versehenen Enden (1, 3 und 2, 4) der gebogenen Abschnitte (9, 10) ermöglichen, so daß sie von den als Muttern ausgebildeten Kugeln (21) gehalten werden.

13. Rad nach Anspruch 12, dadurch gekennzeichnet, daß die als Mutter ausgebildete Kugel (21) vorteilhaft in einer nach außen hin erweiterten Öse (37) gelagert ist, welche eine auf der Felge (11) aufliegende obere äußere Schulter (38) und eine als Auflage für die Kugel (21) dienende innere untere Schulter (39) aufweist.

14. Rad nach einem der Ansprüche 1 bis 12, dadurch gekennzeichnet, daß alle Verbindungen (9, 10, 14, 15, 35 und 36) in Form von zwei geradlinigen Elementen vorliegen, welche an den Enden mit einem Gewinde und mit als Muttern ausgebildeten Kugeln (21) versehen sind, oder an einem Ende mit einem Gewinde und am anderen Ende mit einem Knauf versehen sind, welcher kugelförmig sein kann.

15. Rad nach Anspruch 8, dadurch gekennzeichnet, daß gewisse Enden der Abschnitte (9, 10, 14, 15, 35 und 36) durch Löten, Kleben oder Bildung von Gelenkenden (18) in Form von Kugeln (21) vorgesehen sind, wobei die Kugeln (21) mit einer Vertiefung in Form eines Doppelschlitzes (24, 25), eines einfachen Schlitzes, oder eines Kreuzes versehen sind.

16. Rad nach einem der Ansprüche 1 bis 12, 14 und 15, dadurch gekennzeichnet, daß die Abschnitte (9, 10 und/oder 14, 15) zweifach, in eine eckige U-Form gebogene Abschnitte mit geschlossenen oder gekreuzten Armen sind, wobei die Druckstrebe (12) eine oder mehrere Durchgänge parallel zu ihrer Achse aufweist oder auch eine Kugelform mit Löchern, welche dazu vorgesehen sind, die das Muttelstück des U bildenden, zwischen den Biegungen enthaltenen Abschnitte aufzunehmen.

17. Rad nach einem der Ansprüche 1 und 3 bis 5, dadurch gekennzeichnet, daß die Abschnitte (14, 15, 35, 36) die Form einer viersträngigen Speichenanordnung aufweisen, welche von einem einzigen Draht gebildet wird, der durch eine Längsdurchführung (40) in der Druckstrebe (12) oder durch eine Querdurchführung in der Nabe (13) parallel zu deren Achse oder durch Langlöcher in den Flanschen der Nabe (13) hindurchgeht, wobei sich zwei direkt verlaufende Stränge (41) von der Druckstrebe (12) oder von der Nabe (13) in Richtung auf die Nabe (13) oder auf die Druckstrebe (12) hin erstrecken und mittels einer Biegung, welche durch Langlöcher (43) in den Flanschen der Nabe (13) oder Langlöcher in den Enden der Druckstrebe (12) hindurchgeht, mit zwei überkreuz verlaufenden Strängen (42) verbunden sind, wobei die überkreuz verlaufenden Stränge (42) jeweils an ihrem freien Ende mit einem umgebogenen Abschnitt (44) versehen sind, welcher in ein entsprechendes Loch (45) in den Enden der Druckstrebe (12) oder in ein Langloch in den Flanschen der Nabe (13) oder in ein Loch in der Nabe (13) eingreift, und die Biegungen der gebogenen Abschnitte (9 und 10), welche mit der Nabe (11) verbunden sind, auf dem Grund von Vertiefungen (46) aufliegen, welche an den Enden der Druckstrebe (12) vorgesehen sind.

18. Rad nach einem der Ansprüche 1 und 3 bis 5, dadurch gekennzeichnet, daß die Abschnitte (14, 15, 35, 36) die Form einer Speichenanordnung mit vier paarweisen oder einzelnen Strängen (41 und 42) aufweisen, welche mit einer Längsdurchführung (40) in der Druckstrebe (12) oder einer zur Nabenachse parallelen Querdurchführung in der Nabe (13) oder Langlöchern in den Flanschen der Nabe (13) zusammenwirken, wobei sich zwei direkt verlaufende Stränge (41) von der Druckstrebe (12) oder von der Nabe (13) in Richtung auf die Nabe (13) oder auf die Druckstrebe (12) hin erstrecken und mit der jeweils letzteren verbunden sind, wobei die überkreuz verlaufenden Stränge (42) mit Langlöchern in den Flanschen der Nabe (13) oder Langlöchern in den Enden der Druckstrebe (12) zusammenwirken, und die überkreuz verlaufenden Stränge (42) an ihren Enden jeweils entweder mit einem umgebogenen Teil (44) versehen sind, welches in ein entsprechendes Loch (45) in den Enden der Druckstrebe (12) oder in ein Langloch in den Flanschen der Nabe (13) oder in ein Loch in der Nabe (13) eingreift, oder mit einem Gewinde versehen sind, welches mit einer als Mutter ausgebildeten Kugel zusammenwirkt, und die Biegungen der mit der Felge (11) verbundenen gebogenen Abschnitte (9 und 10) auf dem Grund von Vertiefungen (46) aufliegen, welche in den Enden der Druckstrebe (12) vorgesehen sind.

19. Rad nach Anspruch 17, dadurch gekennzeichnet, daß die viersträngige Speichenanordnung aus einem geschlossenen oder endlosen Draht gebildet ist, wobei die Verbindung der Strangenden durch Bügel erreicht wird, welche an der Nabe (13) mit Zapfen zusammenwirken, die durchgängig sein können und in der Nabe (13) oder deren Flanschen vorgesehen oder durch Einhaken der Zapfen an ihr oder an ihnen festgehalten werden, und an der Druckstrebe (12) entweder in einer Vertiefung in den Enden der Strebe eingehakt sind oder durch ein in den Enden vorgesehenes Loch hindurchgehen.
